# EUROPEAN PATENT APPLICATION

(11) **EP 4 187 925 A1**
(43) Date of publication of application: **31.05.2023**
(21) Application number: 21210922.7
(22) Date of filing: 29.11.2021
(51) Int. Cl.: H04R 25/00, H02J 7/00, H02J 50/10, H02J 50/12

(54) **HEARING DEVICE**

(71) Applicant: Sonova AG, 8712 Stäfa (CH)
(72) Inventor: WUNDERLI, Hans, 8050 Zürich (CH); BRUNNER, Christian, 8645 Jona (CH); SCHLESINGER, Axel, 8633 Wolfhausen (CH)
(74) Representative: Liedtke, Markus

(57) **Abstract**

The invention relates to a hearing device (2), comprising a hearing device housing (13), a rechargeable battery (6), two or more galvanic hearing device contacts (8) accessible from outside the hearing device housing (13), an AC/DC converter (7) having an AC side (7.1) and a DC side (7.2), the AC side (7.1) connected to the hearing device contacts (8) and the DC side (7.2) connected to the battery (6)

## Description

### Technical Field

The invention relates to a hearing device.

### Background of the Invention

US 2020/0203981 A1 describes a charging kit for inductively charging a rechargeable hearing device having an inductive coil, including: a base unit having a first cavity; and an adapter configured to be received by the first cavity, wherein the adapter comprises a second cavity configured to receive the rechargeable hearing device; wherein the base unit is configured to determine a characteristic of the inductive coil of the hearing device; wherein the base unit is configured to provide a current by the base unit based at least in part on the determined characteristic of the inductive coil; and wherein the base unit is configured to inductively charge the rechargeable hearing device.

### Summary of the Invention

It is an object of the present invention to provide a novel hearing device, a novel arrangement comprising a hearing device and a charger, and a novel method of charging a battery of a hearing device.

The object is achieved by a hearing device according to claim 1, by an arrangement according to claim 7 and by a method according to claim 10.

Preferred embodiments of the invention are given in the dependent claims.

In the context of the present disclosure, a hearing device may for example be a hearing aid, in particular an in the ear hearing aid, or a hearing amplifier.

According to the invention, a hearing device comprises a hearing device housing, a rechargeable battery, two or more galvanic hearing device contacts accessible from outside the hearing device housing, an AC/DC converter having an AC side and a DC side, the AC side connected to the hearing device contacts and the DC side connected to the battery, in particular directly or indirectly, e.g. through a power management unit of the hearing device.

This allows for charging the battery via a galvanic connection using alternating current, thus reducing the risk of corrosion of the galvanic hearing device contacts which could occur when using direct current, e.g. due to exposure to sweat, cerumen and other kinds of contamination which may occur with exposed contacts. Moreover, using alternating current renders the polarity of the galvanic contacts insignificant.

In an exemplary embodiment, the hearing device contacts comprise one or more of the following materials: stainless steel, titanium and steel gold plated. The reduced risk of corrosion allows for using less expensive materials than gold for the galvanic contacts.

In an exemplary embodiment, the AC/DC converter is adapted to be connected with a receive coil to wirelessly receive electrical energy from a transmit coil in a wireless charger. This allows for using the same type of electronics, in particular the AC/DC converter, for a galvanically chargeable hearing device as for a wirelessly chargeable hearing device. Using the same components in different products may reduce costs.

In an exemplary embodiment, the hearing device further comprises a receive coil connected to the AC side of the AC/DC converter to supply it with electrical energy wirelessly received from a transmit coil in a wireless charger. This allows for utilizing the same AC/DC converter for wireless and wired charging.

In an exemplary embodiment, the hearing device further comprises a receiver and circuitry for controlling the receiver to generate sound, wherein the receiver and/or the circuitry are/is powered by the battery.

In an exemplary embodiment, the AC/DC converter contains charging circuitry for controlling the charging of the battery, or such charging circuitry is arranged between the DC side of the AC/DC converter and the battery, or the AC/DC converter is part of such charging circuitry.

According to an aspect of the present invention, an arrangement is provided, comprising at least one hearing device as described above and a charger, the charger comprising a charger housing and at least one set of at least two charger contacts accessible from outside the charger housing and configured to releasably contact the hearing device contacts to deliver electrical energy to the hearing device, and a DC/AC converter having an AC side and a DC side, the AC side connected to the charger contacts and the DC side connected to at least one energy source.

In an exemplary embodiment, the energy source comprises a charger battery and/or a wired connection.

In an exemplary embodiment, the charger contacts comprise one or more of the following materials: stainless steel, titanium and steel gold plated.

According to an aspect of the present invention, a method of charging a rechargeable battery of a hearing device as described above is provided, comprising: galvanically connecting the hearing device contacts to a set of charger contacts of a charger, supplying the charger contacts with an alternating current, converting the alternating current to a direct current in the AC/DC converter and charging the battery using the direct current.

In an exemplary embodiment, the method further comprises providing the alternating current using a DC/AC converter arranged in the charger and supplying the DC/AC converter with a direct current from at least one energy source.

In an exemplary embodiment, a charger battery and/or a wired connection are/is used as the energy source.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawing which is given by way of illustration only, and thus, is not limitative of the present invention, and wherein:

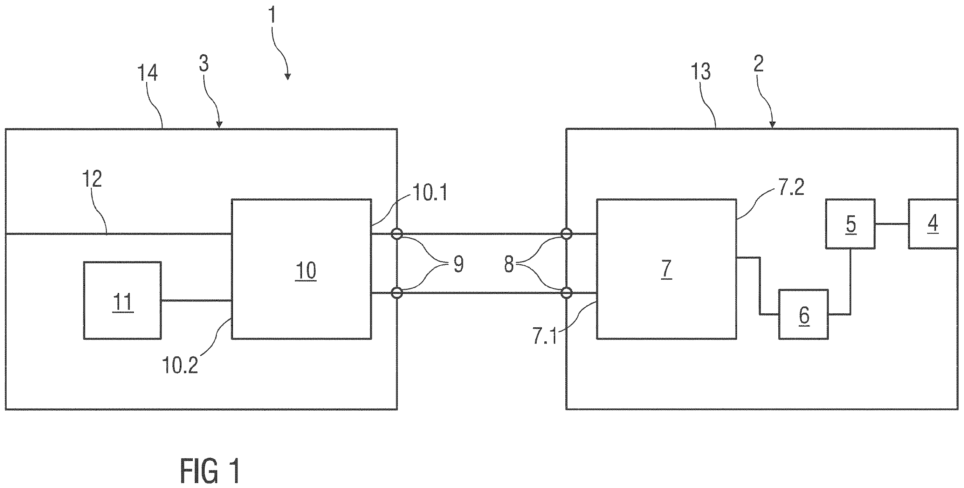

- Figure 1: is a schematic view of an arrangement comprising a hearing device and a charger.

### Detailed Description of Preferred Embodiments

**Figure 1** is a schematic view of an arrangement 1 comprising a hearing device 2 and a charger 3.

The hearing device 2 may comprise a hearing device housing 13, a receiver 4 and circuitry 5 for controlling the receiver 4 to generate sound. Moreover, the hearing device 2 comprises a rechargeable battery 6, e.g. a Lithium Ion cell, for powering the receiver 4 and the circuitry 5, and optionally for powering further components which may be part of the hearing device 2. Furthermore, the hearing device 2 comprises galvanic hearing device contacts 8 accessible from outside the hearing device housing 13 for being supplied with electrical energy in order to charge the battery 6. The galvanic hearing device contacts 8 are connected, in particular permanently connected, to an AC side 7.1 of an AC/DC converter 7, e.g. configured as a rectifier or comprising a rectifier. A DC side 7.2 of the AC/DC converter 7 is connected to the battery 6. The AC/DC converter 7 may contain charging circuitry controlling the charging of the battery 6, or such charging circuitry may be arranged between the DC side 7.2 of the AC/DC converter 7 and the battery 6, or the AC/DC converter 7 may be part of such charging circuitry.

The charger 3 comprises a charger housing 14, galvanic charger contacts 9 accessible from outside the charger housing 13 and configured for delivering electrical energy to a hearing device 2 which may be releasably galvanically connected by its galvanic hearing device contacts 8 to the charger contacts 9. The galvanic charger contacts 9 are connected, in particular permanently connected, to an AC side 10.1 of a DC/AC converter 10. The charger 3 may comprise a charger battery 11 and/or a wired connection 12, e.g. by mains or USB, to supply a DC side 10.2 of the DC/AC converter 10 with electrical energy.

The arrangement 1 allows for charging the battery 6 of the hearing device 2 via a galvanic connection using alternating current, thus reducing the risk of corrosion of the galvanic hearing device contacts 8 which could occur when using direct current, e.g. due to exposure to sweat, cerumen and other kinds of contamination which may occur with exposed contacts.

Moreover, using alternating current renders the polarity of the galvanic contacts 8, 9 insignificant. Furthermore, the reduced risk of corrosion allows for using less expensive materials than gold for the galvanic contacts 8, 9.

In an exemplary embodiment, the hearing device 2 may additionally comprise a receive coil (not shown) connected to the AC side 7.1 of the AC/DC converter 7 to supply it with electrical energy wirelessly received from a transmit coil in a wireless charger (not shown).

### List of References

- 1: arrangement
- 2: hearing device
- 3: charger
- 4: receiver
- 5: circuitry
- 6: battery
- 7: AC/DC converter
- 7.1: AC side
- 7.2: DC side
- 8: hearing device contact
- 9: charger contacts
- 10: DC/AC converter
- 10.1: AC side
- 10.2: DC side
- 11: charger battery
- 12: wired connection
- 13: hearing device housing
- 14: charger housing

## Claims

1. A hearing device (2), comprising a hearing device housing (13), a rechargeable battery (6), two or more galvanic hearing device contacts (8) accessible from outside the hearing device housing (13), an AC/DC converter (7) having an AC side (7.1) and a DC side (7.2), the AC side (7.1) connected to the hearing device contacts (8) and the DC side (7.2) connected to the battery (6).

2. The hearing device (2) of claim 1, wherein the hearing device contacts (8) comprise one or more of the following materials: Stainless steel, titanium, steel gold plated.

3. The hearing device (2) according to claim 1 or 2, wherein the AC/DC converter (7) is adapted to be connected with a receive coil to wirelessly receive electrical energy from a transmit coil in a wireless charger.

4. The hearing device (2) according to claim 1 or 2, further comprising a receive coil connected to the AC side (7.1) of the AC/DC converter (7) to supply it with electrical energy wirelessly received from a transmit coil in a wireless charger.

5. The hearing device (2) according to any one of the preceding claims, further comprising a receiver (4) and circuitry (5) for controlling the receiver (4) to generate sound, wherein the receiver (4) and/or the circuitry (5) are/is powered by the battery (6).

6. The hearing device (2) according to any one of the preceding claims, wherein the AC/DC converter (7) contains charging circuitry for controlling the charging of the battery (6), or wherein such charging circuitry is arranged between the DC side (7.2) of the AC/DC converter (7) and the battery (6), or wherein the AC/DC converter (7) is part of such charging circuitry.

7. An arrangement (1), comprising at least one hearing device (2) according to any one of the preceding claims and a charger (3), the charger (3) comprising a charger housing (14) and at least one set of at least two charger contacts (9) accessible from outside the charger housing (14) and configured to releasably contact the hearing device contacts (8) to deliver electrical energy to the hearing device (2), and a DC/AC converter (10) having an AC side (10.1) and a DC side (10.2), the AC side (10.1) connected to the charger contacts (9) and the DC side (10.2) connected to at least one energy source.

8. The arrangement (1) according to claim 7, wherein the energy source comprises a charger battery (11) and/or a wired connection (12).

9. The arrangement (1) according to claim 7 or 8, wherein the charger contacts (9) comprise one or more of the following materials: stainless steel, titanium and steel gold plated.

10. A method of charging a rechargeable battery (6) of a hearing device (2) according to any one of claims 1 to 6, comprising: galvanically connecting the hearing device contacts (8) to a set of charger contacts (9) of a charger (3), supplying the charger contacts (9) with an alternating current, converting the alternating current to a direct current in the AC/DC converter (7) and charging the battery (6) using the direct current.

11. The method of claim 10, further comprising providing the alternating current using a DC/AC converter (10) arranged in the charger (3) and supplying the DC/AC converter (10) with a direct current from at least one energy source.

12. The method of claim 11, wherein a charger battery (11) and/or a wired connection (12) are/is used as the energy source.
